# EUROPEAN PATENT APPLICATION

(11) **EP 2 657 202 A1**
(43) Date of publication of application: **30.10.2013**
(21) Application number: 11851380.3
(22) Date of filing: 07.12.2011
(51) Int. Cl.: C03C 17/28, B32B 17/10, C03C 17/34, C03C 27/06, B60J 1/00

(54) **HEAT RAY SHIELDING GLASS AND DOUBLE GLAZING USING SAME**

(30) Priority: 22.12.2010 JP 2010285417; 06.06.2011 JP 2011125989
(71) Applicant: Bridgestone Corporation, Tokyo 104-8340 (JP)
(72) Inventor: SUZUKI Yuji, Yokohama-shi Kanagawa 244-8510 (JP); HATANAKA Akito, Yokohama-shi Kanagawa 244-8510 (JP)
(74) Representative: Lamb, Martin John Carstairs
(86) International application number: PCT/JP2011/078273
(87) International publication number: WO 2012/086414

(57) **Abstract**

A solar control glass, which has excellent heat-ray shielding property, especially heat-ray reflection property (thermal insulation property), and suppresses occurrence of electromagnetic interference, and which can be produced in low cost, is provided. The solar control glass 10 which comprises a glass plate 11 and a heat-ray reflection layer 14 comprising an electrically-conductive polymer provided thereon, wherein the heat-ray reflection layer 14 has a surface emissivity of not more than 0.7, and the electrically-conductive polymer in the heat-ray reflection layer 14 has an electrical conductivity of 0.005 to 200S/cm, and a solar control double glass having the solar control glass.

## Description

### Technical Field

The present invention relates to a solar control glass having heat-ray shielding property or heat-ray reflection property, and a solar control double glass having the solar control glass.

### Background Art

In order to reduce the air-conditioning loads of buildings, vehicles such as bus and automobile, and rail cars such as electric car, the windows mounted these buildings or vehicles heretofore have been required to have the functions of shielding near infrared rays (heat-ray) in the solar light and of insulating heat by reflecting heat-ray emitted from inside of a room. As glasses shielding or reflecting heat-ray, a heat-ray adsorbing glass obtained by introducing ions such as Fe, Cr and Ti by kneading action to add heat-ray adsorbing property to a glass, a heat-ray reflecting glass having metal oxide film formed by deposition, a heat-ray reflecting glass having a transparent thin film of indium-tin oxide (ITO) or tin oxide (ATO) formed by dry-plating, and a heat-ray shielding glass having a heat-ray shielding film (also referred to as Low-E film) obtained by lamination of a noble metal film/metal oxide film mainly consisting of metal oxide film/Ag film (Patent Document 1), have been developed, and put to practical use. Of these glasses or films, the Low-E film has functions (thermal insulation properties) of transmitting near infrared rays of the solar light (having relative short wavelength) and shielding middle infrared rays and far infrared rays.

As these glasses shielding heat-ray (i.e., solar control glass), especially the glass having the Low-E film, a double glass having the structure that the glass shielding or reflecting heat-ray and another glass are arranged at a predetermined interval (through an air layer) such that these glasses face each other has been also developed in order to improve thermal insulation property (Patent Document 2). Thereby, energy consumed by cooling and heating can be further reduced.

However, the Low-E film used is formed by vacuum film forming method such as sputtering method, which requires a large-scaled equipment to bring about an increased production cost. Further, a metal film is apt to be corroded and therefore a heat-ray shielding glass having the metal film is reduced in good appearance by long-term use.

Further, a solar control glass enhanced in thermal insulation property and visible light transmittance, in which a coating layer comprising a particle of tungsten oxide and/or composite tungsten oxide (hereinafter referred to as (composite) tungsten oxide) and an UV-excitation color protection agent is formed on a glass plate, has been developed (Patent Document 3). Though the above solar control glass has excellent function shielding near infrared rays of sun light, it shows reduced function of thermal insulation properties preventing middle infrared rays and far infrared rays from emitting. Therefore, the solar control glass may not occasionally show sufficient performance depending on use applications.

Further, it is known that the property absorbing infrared rays is found in an electrically-conductive polymer. Therefore, a transparent heat-shielding film comprising a surface protection layer, a heat-shielding layer containing the electrically-conductive polymer, a substrate, an ultraviolet ray absorbing layer and an adhesive layer has been developed (Patent Document 4). The electrically-conductive polymers are remarkable in ease of producing film.

### Prior Art Documents

### Patent Document

Patent Document 1: JP (TOKKAI) 2001-226148 A
Patent Document 2: JP (TOKKAI) 2007-070146 A
Patent Document 3: JP (TOKKAI) 2007-269523 A
Patent Document 4: JP (TOKKAI) 2005-288867 A

### Summary of the Invention

### Problem to be solved by the Invention

However, the transparent heat-shielding film of Patent Document 4 having an electrically-conductive polymer does not show sufficient heat-ray shielding property. Further, the study of the inventors reveals that the transparent heat-ray shielding glass provided with a heat-ray reflection layer having an electrically-conductive polymer shows enhanced heat shielding property depending on conditions whereas the glass makes use of a communication device such as a cell-phone impossible by electromagnetic interference.

It is therefore an object of the present invention to provide a solar control glass, which has excellent heat-ray shielding property, especially heat-ray reflection property (thermal insulation property), and suppresses occurrence of electromagnetic interference, and which can be produced in low cost.

Further, an object of the present invention is to provide a solar control double glass having the solar control glass.

### Means for Solving Problem

The above object can be attained by a solar control glass which comprises a glass plate and a heat-ray reflection layer comprising an electrically-conductive polymer provided thereon, wherein the heat-ray reflection layer has a surface emissivity of not more than 0.7, and the electrically-conductive polymer in the heat-ray reflection layer has an electrical conductivity of 0.005 to 200S/cm.

The inventors have earnestly studied an influence of various properties of an electrical-conductive polymer in the heat-ray reflection layer on thermal insulation property and electromagnetic interference. As a result, they found that a solar control glass having a heat-ray reflection layer shows sufficient thermal insulation property and suppressing electromagnetic interference obstructing the use of a communication device such as a cell-phone can be obtained, as long as the heat-ray reflection layer has the surface emissivity as defined above, and is formed from the electrically-conductive polymer having the electrical conductivity as defined above. When the electrical conductivity of the electrically-conductive polymer is less than 0.005S/cm, the solar control glass may not get the sufficient thermal insulation property. Furthermore, when the electrical conductivity of the polymer is more than 200S/cm, the solar control glass may have the electromagnetic interference.

The embodiments of the solar control glass according to the present invention are described as follows.

(1) The electrically-conductive polymer in the heat-ray reflection layer has an electrical conductivity of 0.01 to 100S/cm.
(2) The electrically-conductive polymer in the heat-ray reflection layer has an electrical conductivity of 0.1 to 20S/cm.
(3) The heat-ray reflection layer has a thickness of 10 to 3,000nm.
(4) A product (k.d) of the electrical conductivity (k (S/cm)) of the electrically-conductive polymer in the heat-ray reflection layer and the thickness (d (nm)) of the heat-ray reflection layer is 0.5 to 20000. When the relation between the electrical conductivity (k) of the electrically-conductive polymer in the heat-ray reflection layer and the thickness (d) of the heat-ray reflection layer is in the range as defined above, it is possible to obtain a solar control glass, which has more sufficient thermal insulation property and which suppresses the occurrence of the electromagnetic interference obstructing a use of a communication device such as a cell-phone.
(5) The electrically-conductive polymer is a polythiophene derivative comprising a recurring unit represented by the following formula (I):

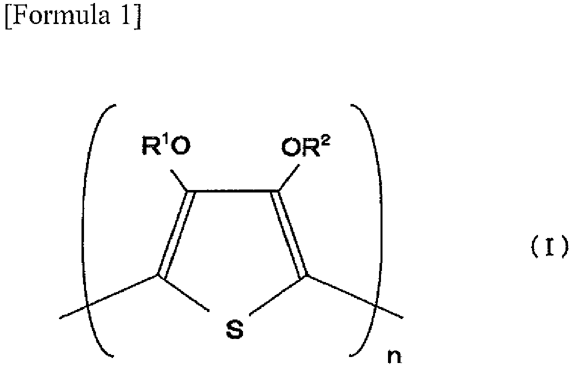

in which R¹ and R² independently represent a hydrogen atom or an alkyl group of 1 to 4 carbon atoms, or R¹ and R² combine with each other to form an alkylene group of 1 to 4 carbon atoms which may be arbitrarily substituted, and n is an integer of 50 to 1,000.

(6) The solar control glass comprises further a heat-ray shielding layer composed of a resin composition comprising a near-infrared absorbing agent and a binder. Further provision of the above heat-ray shielding layer improves the heat-ray shielding property of the solar control glass. In more detail, the combination of the heat-ray reflection layer having low emitting property (thermal insulation property) by reflecting middle infrared rays and far infrared rays with the heat-ray shielding layer shielding unwanted sun light (near infrared rays) can improve the heat-ray shielding property of the solar control glass. Thereby, the solar control glass having ability to further reduce energy consumption for air conditioning can be obtained, which gives the solar control glass having suppressed electromagnetic interference. The heat-ray shielding layer is preferably formed on the lower side of the heat-ray reflection layer.
(7) The near-infrared absorbing agent is tungsten oxide and/or composite tungsten oxide. Thereby, the solar control glass having more enhanced heat-ray shielding property can be obtained.
(8) The tungsten oxide is represented by a general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, T1, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.
(9) The heat-ray shielding layer has a thickness of 0.5 to 50µm.
(10) The solar control glass has further a surface protection layer formed on the heat-ray reflection layer, the surface protection layer having a thickness of not more than 2µm. In case the layer of the electrically-conductive polymer contains materials having excellent physical properties and water resistance for enhancing durability, the layer does not occasionally acquire sufficient thermal insulation property due to the reduction of free electron density. Furthermore, in case the surface protection layer having thick layer is formed on the heat-ray reflection layer, the layer does not occasionally acquire sufficient thermal insulation property due to the absorption of infrared ray by the surface protection layer. By setting the surface protection layer formed on the heat-ray reflection layer so as to have the above-mentioned thickness, the heat-ray reflection layer comprising an electrically-conductive polymer can be protected from physical damage such as abrasion or scratch and water such as rain water, dew drop or moisture without impairing excellent thermal insulation property of the heat-ray reflection layer. Hence, the solar control glass having enhanced durability can be obtained. The thickness of the surface protection layer is preferably in the range of 0.01 to 2µm, more preferably 0.05 to 1µm, especially preferably 0.4 to 0.8µm.
(11) The surface protection layer is a hard coat layer formed from an ultraviolet-curable resin composition or a thermosetting resin composition.

Furthermore, the above object can be attained by a solar control double glass which comprises the solar control glass of the present invention and another glass plate, the solar control glass and the another glass being arranged at an interval such that the heat-ray reflection layer or the surface protection layer faces the another glass and the interval forming a hollow layer.

The adoption of a double glass as mentioned above makes it possible to add further thermal insulation property by the hollow layer and to obtain sufficient thermal insulation property even if the heat-ray reflection layer comprises an electrically-conductive polymer having lowered electrical conductivity. Furthermore, the adoption of a double glass makes it possible to protect the heat-ray reflection layer from physical damage such as abrasion and water such as rain water, dew drop or moisture and to maintain the thermal insulation property for a prolonged period. In addition, the hollow layer as mentioned above is preferably formed by arranging the solar control glass and another glass plate through a spacer.

### Advantageous Effects of the Invention

In the present invention, the heat-ray reflection layer of the solar control glass is formed from an electrically-conductive polymer having the predetermined electrical conductivity. Therefore, the solar control glass has excellent thermal insulation property of the heat-ray reflection layer, which suppresses heat emission from a room and retains heat in the room. In the case outside temperature is higher than the room temperature, the glass does not take in heat of outside air into the room. At the same time, the solar control glass suppresses electromagnetic interference. Therefore, the solar control glass of the present invention is free from problems such as obstruction of cell-phone call in the room or vehicle using the solar control glass. Further the electrically-conductive polymer is made of organic polymer and therefore a layer comprising the polymer can be formed by a low cost method such as coating method, and so the solar control glass can be produced at low cost.

Further, the use of the solar control glass of the present invention brings about the solar control double glass which has excellent thermal insulation property, and suppresses electromagnetic interference and which can be produced at low cost. Furthermore, the adoption of a double glass makes it possible to add further thermal insulation property by the hollow layer and to obtain sufficient thermal insulation property even if the heat-ray reflection layer comprises an electrically-conductive polymer having lowered electrical conductivity. Furthermore, the adoption of a double glass makes it possible to protect the heat-ray reflection layer from physical damage such as abrasion and water such as rain water, dew drop or moisture and to maintain the thermal insulation property for a prolonged period.

### Brief Description of the Drawings

[Fig. 1] Fig. 1 is a schematic section view showing a typical example of a solar control glass according to the present invention.
[Fig. 2] Fig. 2 is a schematic section view showing an example of preferred embodiments of a solar control glass of the present invention.
[Fig. 3] Fig. 3 is a schematic section view showing another example of preferred embodiments of a solar control glass of the present invention.
[Fig. 4] Fig. 4 is a schematic section view showing a typical example of a solar control double glass according to the present invention.

### Description of Embodiments

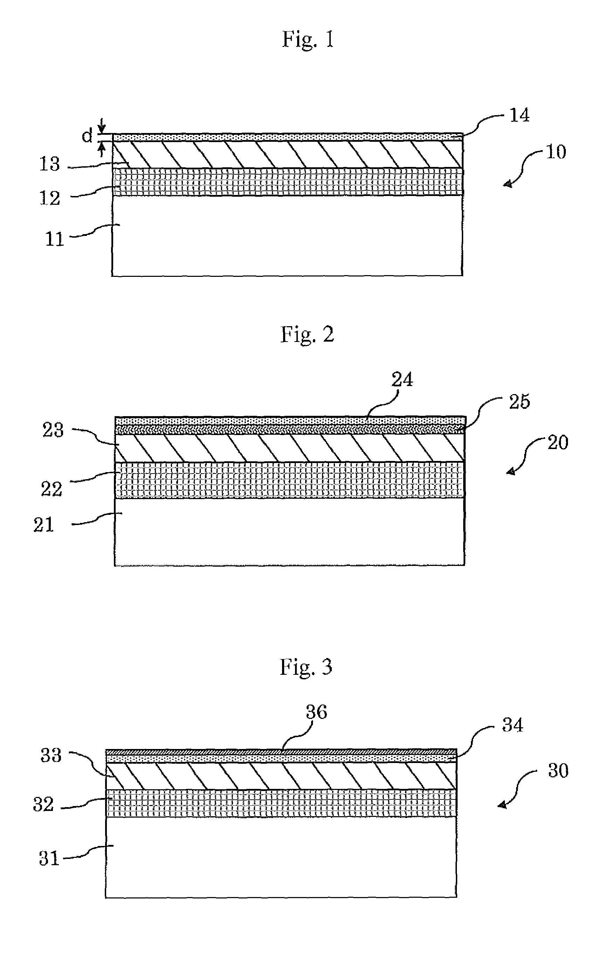

The embodiments of the present invention are explained in detail with reference of the drawing below. Fig. 1 is a schematic section view showing a typical example of a solar control glass according to the present invention. In the invention, the term "glass" of the solar control glass means overall transparent substrates, and therefore includes glass plates, transparent plastic plates and films as well. Thus the solar control glass means a transparent substrate having heat-ray shielding property.

The solar control glass 10 shown in Fig. 1 has the structure that a glass plate 11, an adhesive layer 12 provided thereon, a transparent plastic film 13 and a heat-ray reflection layer 14 comprising an electrically-conductive polymer are superposed in this order to be united. Generally, the solar control glass 10 is prepared by forming the heat-ray reflection layer 14 comprising an electrically-conductive polymer on one side of the transparent plastic film 13 and then bonding the transparent plastic film 13 to the glass plate 11 through the adhesive layer 12 such that the side opposite to the heat-ray shielding layer 14 of the transparent plastic film 13 faces the glass plate 11.

The solar control glass 10 has the heat-ray reflection layer 14 comprising an electrically-conductive polymer, which makes it possible to enhance a reflectance of heat-ray having wavelengths of 2500nm or more (middle infrared rays and far infrared rays), to effectively suppress emission of near ground surface temperature to enhance thermal insulation property. This is considered to be because the plasma-absorbing wavelength by free electron of the electrically-conductive polymer is present on shorter wavelength side than that of emission of a body having near ground surface temperature and therefore the polymer reflects electromagnetic waves which are present on higher wavelength side than the plasma-absorbing wavelength. However, depending on a property of the electrically-conductive polymer, a communication device such as a cell-phone cannot be occasionally used. Thus, the present invention defines that a surface emissivity (according to JIS R 3106) of the heat-ray reflection layer 14 is not more than 0.7, and the electrically-conductive polymer in the heat-ray reflection layer 14 has an electrical conductivity (k) of 0.005 to 200S/cm. Thereby, the solar control glass can provide sufficient thermal insulation property, and suppress the occurrence of the electromagnetic interference obstructing the use of a communication device such as a cell-phone. When the electrical conductivity of the polymer is more than 200S/cm, the solar control glass may have the electromagnetic interference. Further, when the electrical conductivity of the electrically-conductive polymer is less than 0.005S/cm, the surface emissivity cannot meet the above definition, and therefore the solar control glass cannot get the sufficient thermal insulation property. The electrically-conductive polymer in the heat-ray reflection layer 14 has preferably an electrical conductivity of 0.01 to 200S/cm, further preferably 0.01 to 100S/cm, especially preferably 0.1 to 20S/cm. The determination of an electrical conductivity of an electrically-conductive polymer is conducted according to JIS K 7194, after a coating fluid comprising an electrically-conductive polymer is coated and dried to be solidified.

Though, it is not preferred to provide another layer on the heat-ray reflection layer 14, a thin (metal) layer having conductive property or even an organic resin thin layer having no conductive property as mentioned later may be provided on the heat-ray reflection layer 14, as long as the thickness of the thin layer is reduced in such a manner that the thin layer does not prevent the emission suppressive effect of the electrically-conductive polymer. Furthermore, between the heat-ray reflection layer 14 and the transparent plastic film 13, another layer such as a hard coat layer (e.g., a similar layer to a surface protection layer as mentioned later) may be formed in order to enhance physical properties of the sola control glass (not shown in the figure).

In the invention, the heat-ray reflection layer 14 comprising an electrically-conductive polymer has preferably a thickness (d) of 10 to 3,000nm, further preferably 100 to 2,000nm, especially preferably 150 to 1,500nm.

Furthermore, in the invention, a product (k.d) of the electrical conductivity (k (S/cm)) of the electrically-conductive polymer in the heat-ray reflection layer 14 and the thickness (d (nm)) of the heat-ray reflection layer 14 is preferably 0.5 to 20000. Thereby, the solar control glass can provide further sufficient thermal insulation property, and further suppress the occurrence of the electromagnetic interference obstructing the use of a communication device such as a cell-phone. The product (k.d) is further preferably 5 to 10000, especially preferably 50 to 10000.

In the invention, the adhesive layer 12 and the transparent plastic film 13 may be not provided. The heat-ray reflection layer 14 may be formed directly on the surface of the glass plate 11. Further, the adhesive layer 12 and the heat-ray reflection layer 14 may be formed in this order on the surface of the glass plate 11.

The elements of the solar control glass in the invention are explained below.

### [Heat-ray reflection layer]

An electrically-conductive polymer for forming the heat-ray reflection layer 14 is not restricted, as long as the polymer has an electrical conductivity of the above-mentioned range. The electrically-conductive polymer generally is an organic polymer having conjugated double bond in its basic skeleton. Examples of the electrically-conductive polymer include polythiophene, polypyrrole, polyaniline, polyacetylene, poly(p-phenylene), polyfuran, polyfluorene, polyphenylenevinylene, derivatives thereof and copolymer from monomers constituting these polymers, and the polymer can be preferably used singly or combination of two or more kinds. Of these polymers, preferred is a polythiophene derivative having property soluble or dispersible in water or other solvents, and high conductive property and transparency. Particularly, preferred is a polythiophene derivative comprising a recurring unit represented by the following formula (I):

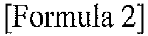

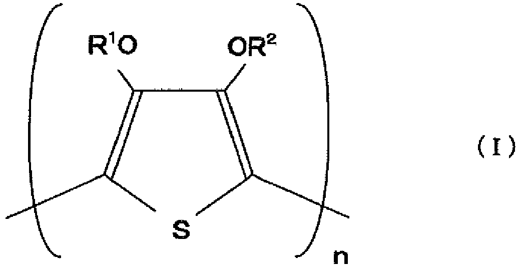

in which R¹ and R² independently represent a hydrogen atom or an alkyl group of 1 to 4 carbon atoms, or R¹ and R² combine with each other to form an alkylene group of 1 to 4 carbon atoms which may be arbitrarily substituted, and n is an integer of 50 to 1,000.

In the formula (I), examples of the alkylene group of 1 to 4 carbon atoms formed by combining R¹ and R² include a methylene group substituted by an alkyl group, and an ethylene-1, 2 group, propylene-1, 3 group and butene-1, 4 group arbitrarily substituted by an alkyl group of 1 to 12 carbon atoms or a phenyl group.
R¹ and R² in the formula (I) are preferably a methyl or ethyl group, or a methylene group, an ethylene-1, 2 group and propylene-1, 3 group as the group formed by combining R¹ and R². Particularly preferred is a polythiophene derivative having a recurring unit (i.e., 3,4-ethylenedioxythiophene) represented by the following formula (II):

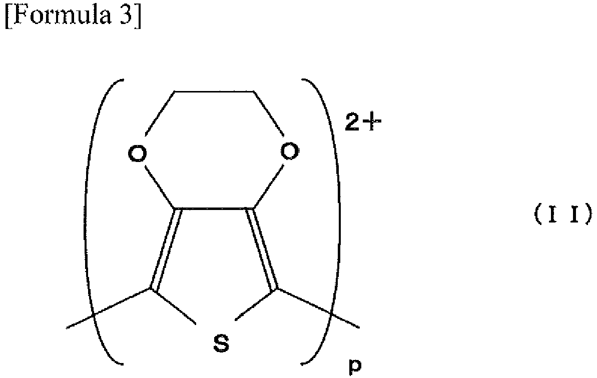

in which p is an integer of 50 to 1,000.

The electrically-conductive polymer preferably contains further a dopant (electron donor). Preferred examples of the dopant include polystyrene sulfonic acid, polyacrylic acid, polymethacrylic acid, polymaleic acid, and polyvinyl sulfonic acid. Particularly, polystyrene sulfonic acid is preferred. The use of the dopant brings about enhancement of conductive property of the electrically-conductive polymer in the heat-ray reflection layer 14 to improve a reflectance of heat-ray, especially middle infrared rays and far infrared rays having wavelengths of 2500nm or more, and to improve suppressing effect of emission of near ground surface temperature. The dopant preferably has number average molecular weight (Mn) of 1,000 to 2,000,000, especially 2,000 to 500,000.

The content of the dopant is generally in the range of 20 to 2,000 parts by weight, preferably 40 to 200 parts by weight, based on 100 parts by weight of the electrically-conductive polymer. For example, in case the polythiophene derivative of the formula (II) is used as the electrically-conductive polymer and the polystyrene sulfonic acid used as the dopant, the content of the polystyrene sulfonic acid is generally in the range of 100 to 200 parts by weight, preferably 120 to 180 parts by weight, based on 100 parts by weight of the polythiophene derivative.

Furthermore, in order to improve coating property and/or adhesion property, additives and/or binder resins may be added into the electrically-conductive polymer to such extent that they do not prohibit effect suppressing heat emission of the heat-ray reflection layer.

The heat-ray reflection layer comprising the electrically-conductive polymer can be formed according to conventional methods. For example, a coating liquid obtained by dissolving or dispersing the electrically-conductive polymer is applied onto a surface of the transparent plastic film, the glass plate or the adhesive layer by means of appropriate coating method such as bar coater method, roll coater method, curtain flow method, spray method, and the resultant coated layer is dried. Preferred examples of solvents used in the coating liquid include water; alcohols such as methanol, ethanol, propanol; ketones such as acetone, methyl ethyl ketone; halogenated hydrocarbons such as carbon tetrachloride, fluorohydrocarbon; esters such as ethyl acetate, butyl acetate; ethers such as tetrahydrofuran, dioxane, diethyl ether; amides such as N,N-dimethylacetamide, N,N-dimethylformamide, N-methylpyrrolidone. Especially, water and alcohols are preferred.

### [Glass plate]

The glass plate of the invention may be any transparent substrates. For example, glass plates such as a green glass plate, a silicate glass plate, an inorganic glass plate and a colorless transparent glass plate, and a substrate or plate of plastic films as well can be used. Examples of the plastic include polyethylene terephthalate (PET), polyethylene naphthalate (PEN), polyethylene butyrate and polymethyl methacrylate (PMMA). A glass plate is preferred in view of weather resistance and impact resistance. The thickness of the glass plate generally is in the range of 1 to 20mm.

### [Transparent plastic film]

The transparent plastic film of the invention is not restricted. The materials of the transparent plastic film include any plastics having transparency (the transparency meaning transparency to visible light). Examples of the plastic films include polyethylene terephthalate (PET) film, polyethylene naphthalate (PEN) film, polymethyl methacrylate (PMMA) film, polycarbonate (PC) film, polyethylene butyrate film. Preferred is polyethylene terephthalate (PET), because it has high resistance to processing load such as heat, solvent and bending, and especially high transparency. Further the surface of the transparent plastic film may be subjected to adhesion treatment such as corona treatment, plasma treatment, flame treatment, primer layer coating treatment, in order to improve the adhesion of the surface. Otherwise, an adhesion layer of thermosetting resin such as copolymerized polyester resin or polyurethane resin may be provided. The thickness of the transparent plastic film generally is in the range of 1 µm to 10mm, preferably 10 to 400µm, especially 20 to 200µm.

### [Adhesive layer]

Examples of materials of the adhesive layer of the invention include ethylene copolymers such as ethylene/vinyl acetate copolymer (EVA), ethylene/(meth)acrylic acid copolymer, ethylene/ethyl (meth)acrylate copolymer, ethylene/methyl (meth)acrylate copolymer, metal-ion crosslinked ethylene/(meth)acrylic acid copolymer, partially saponified ethylene/vinyl acetate copolymer, carboxylated ethylene/vinyl acetate copolymer, ethylene/(meth)acrylic acid/maleic anhydride copolymer and ethylene/vinyl acetate/(meth)acrylate copolymer. The (meth)acrylic acid means acrylic acid and methacrylic acid and the (meth)acrylate means acrylate and methacrylate. Besides these polymers, there can be mentioned polyvinyl butyral (PVB) resin, epoxy resin, phenol resin, silicon resin, polyester resin, urethane resin, rubber adhesives, thermoplastic elastomer (TPE) such as SEBS (styrene/ethylene/butylene/styrene) and SBS (styrene/ butadiene/styrene). The EVA is preferred because it shows excellent adhesion and transparency.

The content of vinyl acetate recurring unit of EVA used in the adhesive layer preferably is in the range of 23 to 38 parts by weight, especially 23 to 28 parts by weight based on 100 parts by weight of EVA. Thereby, the adhesive layer shows excellent adhesion and transparency. EVA preferably has Melt Flow Index (MFR) of 4.0 to 30.0g/10min., especially 8.0 to 18.0g/10min., which renders preliminary pressure bonding easy.

In case the adhesive layer uses ethylene copolymer, the ethylene copolymer preferably contains further an organic peroxide. The EVA is crosslinked or cured by the organic peroxide to combine the glass plate with the adjacent layer(s), these plate and layer(s) being united. Any organic peroxides that can be decomposed at a temperature of not less than 100°C to generate radical(s) can be employed as the organic peroxide of the invention. The organic peroxide is selected in the consideration of film-forming temperature, condition for preparing the composition, curing (bonding) temperature, heat resistance of body to be bonded, storage stability. Especially, preferred are those having a decomposition temperature of not less than 70°C in a half-life of 10 hours.

Preferred examples of the organic peroxides include 2,5-dimethylhexane-2,5-dihydroperoxide, 2,5-dimethyl-Z,S-(t-butylperoxy)hcxane, di-t-butylperoxide, t-butylcumyl peroxide, 2,5-dimethyl-2,5-di(t-butylperoxy)-3-hexyne, dicumyl peroxide, α,α-bis(t-butylperoxyisopropyl)benzene, n-butyl-4,4-bis(t-butylperoxy)valerate, 1,1-bis(t-butylperoxy)cyclohexane, 1,1-bist(t-butylperoxy)-3,3,5-trimethylcyclohexane, t-butylperoxybenzoate, 2,5-dimethylhexyl-2,5-bisperoxybenzoate, benzoyl peroxide, t-butylperoxyacetate, methyl ethyl ketone peroxide, butyl hydroperoxide, p-menthane hydroperoxide, p-chlorobenzoyl peroxide, hydroxyheptyl peroxide, chlorohexanone peroxide, octanoyl peroxide, decanoyl peroxide, lauroyl peroxide, cumyl peroxyoctoate, succinic acid peroxide, acetyl peroxide, m-toluoyl peroxide, t-butylperoxyisobutylate and 2,4-dichlorobenzoyl peroxide.

The adhesive layer preferably contains further a crosslinking auxiliary or a silane coupling agent for enhancing the adhesive strength.

Examples of crosslinking auxiliaries include polyfunctional compounds such as esters of plural acrylic acids or methacrylic acids with polyhydric alcohol such as glycerol, trimethylol propane or pentaerythritol; and further triallyl cyanurate and triallyl isocyanurate.

Examples of the silane coupling agents include γ-chloropropyltrimethoxysilane, vinyltriethoxysilane, vinyl-tris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropyltrimethoxysilane, γ-aminopropyltriethoxysilane, N-β-(aminoethyl)-γ-aminopropyltrimethoxysilane. The silane coupling agents can be used singly, or in combination of two or more kinds. The content of the silane coupling agent is preferably in an amount of not more than 5 parts by weight based on 100 parts by weight of ethylene copolymer.

The adhesive layer preferably contains acryloxy group-containing compounds, methacryloxy group-containing compounds, epoxy group-containing compounds, plasticizers, ultraviolet absorbers for improvement or adjustment of various properties of the layer (e.g., mechanical strength, adhesive property (adhesion), optical characteristics such as transparency, heat resistance, light-resistance, cross-linking rate), particularly for improvement mechanical strength and light-resistance. Examples of the ultraviolet absorbers include benzophenone compounds, triazine compounds, benzoate compounds, and hindered amine compounds. The benzophenone compounds are preferred from the viewpoint of suppression of yellowing. The content of the ultraviolet absorbers is preferably in an amount of 0.01 to 1.5 parts by weight, especially 0.5 to 1.0 parts by weight based on 100 parts by weight of ethylene copolymer.

The thickness of the adhesive layer is preferably is in the range of 100 to 2,000µm, especially 400 to 1,000µm.

The adhesive layer including ethylene copolymer can be prepared, for example, by molding a composition including ethylene copolymer and an organic peroxide, etc., by a conventional molding process such as extrusion molding or calendaring molding (calendaring) to form a product in the form of layer. The mixing of the composition is preferably carried out by kneading the composition under heating at 40 to 90°C, especially 60 to 80°C. Further, the formation of a film (layer) is preferably carried out at such temperature that the organic peroxide does not have reaction or scarcely has reaction. For example, the temperature is preferably set to the range of 40 to 90°C, especially 50 to 80°C. The adhesive layer may be formed directly on a surface of a plastic film or a glass plate. Otherwise a sheet of the adhesive layer (i.e., in the form of film) may be used for the formation of the adhesive layer.

Fig. 2 is a schematic section view showing an example of preferred embodiments of a solar control glass of the invention. The solar control glass 20 shown in Fig. 2 has the structure that a glass plate 21, an adhesive layer 22 provided thereon, a transparent plastic film 23, a heat-ray shielding layer 25 consisting of a resin composition comprising tungsten oxide and/or composite tungsten oxide as a near-infrared absorbing agent and a binder, and a heat-ray reflection layer 24 comprising an electrically-conductive polymer are superposed in this order to be united. Generally, the solar control glass 20 is prepared by forming the heat-ray shielding layer 25 comprising a binder and a fine particle of a near-infrared absorbing agent dispersed therein on one side of the transparent plastic film 23, and forming the heat-ray reflection layer 24 consisting of an electrically conductive polymer on the heat-ray shielding layer 25, and then bonding the transparent plastic film 23 to the glass plate 21 through the adhesive layer 22 such that the side opposite to the heat-ray shielding layer 25 of the transparent plastic film 23 faces the glass plate 21.

The solar control glass 20 shown in Fig. 2 has the same structure as in Fig. 1 except for forming the heat-ray shielding layer 25. In more detail, a surface emissivity of the heat-ray reflection layer 24 is not more than 0.7, and the electrically-conductive polymer in the heat-ray reflection layer 24 has an electrical conductivity of 0.005 to 200S/cm. Thereby, the solar control glass can provide sufficient thermal insulation property, and suppress the occurrence of the electromagnetic interference obstructing the use of a communication device such as a cell-phone. Further, the heat-ray shielding layer 25 containing a near-infrared absorbing agent is provided on the lower side of the heat-ray reflection layer 24, which brings about more excellent heat-ray shielding property with the combination of the heat-ray reflection layer 24 having low emitting property (thermal insulation property) by reflecting middle infrared rays and far infrared rays and the heat-ray shielding layer 25 shielding unwanted sun light (near infrared rays). Thereby, the solar control glass having ability to further reduce energy consumption for air conditioning can be obtained. The thickness of the heat-ray shielding layer 25 comprising a near-infrared absorbing agent and a binder resin is preferably in the range of 0.5 to 50µm, more preferably 1 to 10µm, especially 2 to 5µm.

The near-infrared absorbing agent is generally inorganic materials or organic dyes, which can be used without particular restriction in the invention. Particularly, a (composite) tungsten oxide fine particle shows excellent function cutting near infrared rays without screening visible light, the near infrared rays being those having wavelength of approx. 850 to 1150nm which are emitted in large quantity from the sun, whereby excellent heat-ray shielding property can be obtained.

Though it is not preferred to provide another layer on the heat-ray reflection layer 24, a thin (metal) layer having conductive property or even an organic resin thin layer having no conductive property as mentioned later may be provided on the heat-ray reflection layer 24, as long as the thickness of the thin layer is reduced in such a manner that the thin layer does not prevent the emission suppressive effect of the electrically-conductive polymer.

### [Heat-ray shielding layer]

The heat-ray shielding layer 25 consists of a resin composition comprising a near-infrared absorbing agent and a binder, as mentioned above. Generally, the near-infrared absorbing agent is inorganic materials or organic dyes having absorption maximum in wavelength of 800 to 1200nm. The examples include tungsten oxide and/or composite tungsten oxide, indium-tin oxide, tin oxide, antimony tin oxide, phthalocyanine dyes, metal complexes dyes, nickel dithioren complexes dyes, cyanine dyes, squalirium dyes, polymethine dyes, azomethine dyes, azo dyes, polyazo dyes, diimmonium dyes, aminium dyes, anthraquinone dyes. These dyes can be employed singly or in combination.

Particularly, the tungsten oxide and/or composite tungsten oxide are preferred because have excellent weather resistance and high visual light transmission.

In case the tungsten oxide and/or composite tungsten oxide are used as a near-infrared absorbing agent, a fine particle of the tungsten oxide and/or composite tungsten oxide is dispersed in a binder resin composition and the dispersed fine particle is used. Though the content of the fine particle of the tungsten oxide and/or composite tungsten oxide in the heat-ray shielding layer is not restricted, the content is generally in the range of 0.1 to 50g per 1m², preferably 0.1 to 20g per 1m², more preferably 0.1 to 10g per 1m². Containing the composite tungsten oxide particle in the amount as mentioned above brings about a solar control glass combining excellent heat-ray shielding property with high visible light transmission.

The tungsten oxide is generally represented by a general formula W_{y}O_{z} wherein W represents tungsten, O represents oxygen, and y and z satisfy the condition of 2.2≤z/y≤2.999. Further, the composite tungsten oxide has a composition obtained by adding to the tungsten oxide element M (M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I). Hence, free electrons are generated in W_{y}O_{z} even in case of z/y=3, and absorption properties derived from the free electrons develop in the region of near infrared rays, whereby the W_{y}O_{z} is useful as material absorbing near-infrared rays at approx. 1,000nm (also referred to as heat-ray shielding material). In the invention, preferred is composite tungsten oxide.

In the tungsten oxide fine particle of the general formula W_{y}O_{z} wherein W represents tungsten and O represents oxygen, the ratio of oxygen to tungsten is preferably less than 3, and further, y and z satisfy the condition of 2.2≤z/y≤2.999. When z/y is not less than 2.2, occurrence of unnecessary WO₂ crystalline phase in heat-ray shielding material can be prevented and the chemical stability of the material can be obtained, whereby the tungsten oxide can be used in effective near-infrared absorbing material. In contrast, when z/y is not more than 2.999, free electrons can be generated in the required amount whereby the resultant heat-ray shielding material has high efficiency.

The composite tungsten oxide fine particle is preferably represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3, in view of stability. The alkaline metals are elements in 1st group of Periodical Table of the Elements except for hydrogen, the alkaline-earth metals are elements in 2nd group of Periodical Table of the Elements, and the rare-earth elements are Sc, Y and lanthanide elements.

Particularly, from the viewpoint of enhancement of optical properties and weather resistance, M element is preferably one or more element selected from Cs, Rb, K, Tl, In, Ba, Li, Ca, Sr, Fe and Sn. Further the composite tungsten oxide is preferably treated with a silane coupling agent, whereby the resultant oxide shows excellent dispersing properties and hence brings about excellent near-infrared shielding properties and transparency.

When x/y which represents the addition amount of M is not less than 0.001, free electrons can be generated in a sufficient amount whereby the resultant near-infrared absorbing material shows sufficient heat shielding effect. The amount of free electrons is increased with increase of the addition amount of the element M, which results in enhancement of heat shielding effect, but the amount of free electrons is saturated when x/y attains approx. 1. In contrast, when x/y is not more than 1, occurrence of an impurities phase in the solar control layer can be preferably prevented.

Also in the composite tungsten oxide represented by a general formula MₓW_{y}O_{z}, a value of z/y which represents control of oxygen amount functions in the same manner as in the solar control material represented by W_{y}O_{z}. In addition, the free electrons are provided depending on the addition amount of the element M even in case of z/y=3.0, and therefore z/y is preferably 2.2≤z/y≤3.0, more preferably 2.45≤z/y≤3.0.

In case the composite tungsten oxide particle has crystal structure of hexagonal crystal, the oxide is enhanced in transmission in visual light region and in absorption in near-infrared region.

In case a cation of element M exists in voids of hexagonal shape of the hexagonal crystal by the addition of the element M, the transmission in visual light region and the absorption in near-infrared region are enhanced. In general, the addition of element M having large ion radius brings about the formation of the hexagonal crystal, particularly the addition of Cs, K, Rb, Tl, In, Ba, Sn, Li, Ca, Sr, Fe facilitates the formation of the hexagonal crystal. Naturally, it is effective that even an addition element other than the above-mentioned elements exists in voids of the hexagonal shape formed from WO₆ units, and hence the addition element is not restricted to the above-mentioned elements.

In case the composite tungsten oxide particle having hexagonal crystal has uniform crystal structure, the addition amount of the addition element M is preferably set as a value of x/y to 0.2 to 0.5, more preferably 0.33. It is considered that x/y of 0.33 results in the addition element M being placed in all voids of the hexagonal shape.

Tungsten bronze having tetragonal or cubical crystal besides hexagonal crystal also has heat shielding effect. The absorption position in near-infrared region is apt to vary depending upon the crystal structures, and the absorption position tends to move in the longer wavelength direction in the order of tetragonal<cubical<hexagonal crystal. With this tendency, the absorption in visual light region is apt to become small in the order of hexagonal<cubical<tetragonal crystal. Therefore, in use (application) that is required to transmit highly visual light and to shield highly near-infrared ray, it is preferred to use tungsten bronze having hexagonal crystal. In addition, the surface of the tungsten oxide and/or composite tungsten oxide of the invention is preferably coated with oxide containing one or more kind of Si, Ti, Zr and Al for the purpose of enhancement of weather resistance.

The average particle size of the fine particle of the composite tungsten oxide is preferably in the range of 10 to 800nm, especially 10 to 400nm in order to retain the transparency. This is because particles having the average particle size of not more than 800nm do not completely screen light due to scattering and therefore make it possible to retain visibility in the visible light region and simultaneously effectively ensure transparency. In case of particularly emphasizing transparency the visible light region, it is preferred to consider the scattering of the particles. In case of considering the reduction of the scattering, the average particle size is preferably in the range of 20 to 200nm, more preferably 20 to 100nm.

The determination of the average particle size of the particle is carried out by observing a section view of the heat-ray shielding layer at approx. 1,000,000-fold magnification by a transmission electron microscope and measuring diameters of circles corresponding to projected areas of at least 100 particles to determine their average value.

The fine particle of the (composite) tungsten oxide of the invention is, for example, prepared as follows:

The fine particle of the tungsten oxide represented by a general formula W_{y}O_{z} and/or the fine particle of the composite tungsten oxide represented by a general formula MₓW_{y}O_{z} can be obtained by subjecting a starting material of a tungsten compound to heat treatment under an inert gas or reducing gas atmosphere.

Examples of the starting material of tungsten compound preferably include tungsten trioxide powder, tungsten oxide hydrate, tungsten hexachloride powder, ammonium tungstate powder, tungsten oxide hydrate powder obtained by dissolving tungsten hexachloride in alcohol and drying it, tungsten oxide hydrate powder obtained by dissolving tungsten hexachloride in alcohol, forming precipitation by addition of water and drying the precipitation, tungsten compound powder obtained by drying an ammonium tungstate aqueous solution, and metal tungsten powder, and one or more of the examples can be also used.

In order to facilitate the preparation of the tungsten oxide fine particle, it is more preferred to use tungsten oxide hydrate powder or tungsten compound powder obtained by drying an ammonium tungstate aqueous solution. The preparation of composite tungsten fine oxide is more preferably carried out by using an ammonium tungstate aqueous solution or a tungsten hexachloride solution because the solution of starting material easily enables homogeneous mixing of elements to be used. Thus, the fine particle of the tungsten oxide and/or the composite tungsten oxide having the particle size as mentioned above can be obtained by subjecting the above-mentioned material(s) to heat treatment under an inert gas or reducing gas atmosphere.

The fine particle of the composite tungsten oxide represented by a general formula MₓW_{y}O_{z} can be prepared by using a starting material of tungsten oxide particle containing further an element of M or an M-containing compound though in the same manner as the starting material of tungsten oxide of a general formula W_{y}O_{z}. In order to prepare a starting material in which used components are homogeneously mixed in molecular level, solutions of components are preferably mixed with each other. Hence it is preferred that a tungsten compound containing element M is dissolvable in a solvent such as water, or organic solvent. For example, there are above-mentioned tungstates, chlorides, nitrates, sulfates, oxalates or oxides containing element M. However, these are not restricted, and any in the form of solution can be preferably used.

The heat treatment under an inert gas atmosphere is preferably carried out in the condition of 650°C or higher. The starting material heat-treated at 650°C or higher has sufficient coloring power and hence brings about heat-ray-shielding fine particle having excellent efficiency. Examples of the inert gas preferably include Ar, N₂. Further, the heat treatment under a reducing gas atmosphere is preferably carried out by heating a starting material at temperature of 100 to 650°C under a reducing gas atmosphere and then heating at temperature of 650 to 1200°C under an inert gas atmosphere. Example of the reducing gas preferably includes H₂, but is not restricted to. In case H₂ is used as the reducing gas, a composition of the reducing gas has preferably not less than 0.1% by volume of H₂, more preferably not less than 2% by volume of H₂. Use of not less than 0.1% by volume of H₂ enables the reduction to effectively promote.

The material powder reduced with hydrogen contains magnelli phase and shows excellent heat-ray shielding properties, and hence the material powder can be used as heat-ray shielding fine particle without modification. However, since hydrogen contained in tungsten oxide is unstable, its application may be restricted in view of weather resistance. By subjecting the tungsten oxide containing hydrogen to heat treatment at temperature of 650°C or higher under an inert gas atmosphere, further stable heat-ray shielding particle can be obtained. Though the atmosphere in the heat treatment is not restricted, the atmosphere preferably includes N₂ or Ar in view of industrial aspect. The heat treatment at temperature of 650°C or higher brings about formation of magnelli phase in the heat-ray shielding fine particle whereby weather resistance is enhanced.

The composite tungsten oxide particle of the invention has been preferably subjected to surface treatment by a coupling agent such as a silane coupling agent, a titanate coupling agent or an aluminum coupling agent. The silane coupling agent is preferred. Thereby the composite tungsten oxide becomes to have excellent compatibility with binder resin, which results in improvement of various properties such as transparency, heat-ray shielding properties.

Examples of the silane coupling agents include γ-chloropropyltrimethoxysilane, vinyltriethoxysilane, vinyl-tris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane, trimethoxyacrylsilane. Preferred are vinyltris(β-methoxyethoxy)silane, γ-methacryloxypropyltrimethoxysilane, vinyltriacetoxysilane, trimethoxyacrylsilane. The silane coupling agents can be used singly, or in combination of two or more kinds. The content of the silane coupling agent is preferably in an amount of 5 to 20 parts by weight based on 100 parts by weight of the fine particle.

As the binder of the resin composition, known thermoplastic resin, ultraviolet curable resin and thermosetting resin can be used. Examples of the binder include transparent synthetic resins such as silicone resin, fluoro resin, olefin resin, acrylic resin, polyester resin, epoxy resin, urethane resin, phenol resin, resorcinol resin, urea resin, melamine resin, furan resin. Preferred is silicone resin, fluoro resin, olefin resin, or acrylic resin in view of weather resistance. The thermoplastic resin and ultraviolet curable resin, especially ultraviolet curable resin is preferred. The ultraviolet curable resin is preferred because it can be cured in a short time, and results in high productivity. The resin composition contains a thermal polymerization initiator or photopolymerization initiator depending upon curing methods. The resin composition further contains a curing agent such as a polyisocyanate compound. Further, in case the heat-ray shielding layer is used as an adhesive layer, the layer can employ a transparent adhesive resin such as ethylene/vinyl acetate copolymer (EVA) and polyvinyl butyral (PVB) as a binder in the same manner as an adhesive layer mentioned above.

In case the (composite) tungsten oxide is used as the near-infrared absorbing agent, the content of the (composite) tungsten oxide of the heat-ray shielding layer is preferably in an amount of 10 to 500 parts by weight, further preferably 20 to 500 parts by weight, especially 30 to 300 parts by weight based on 100 parts by weight of the binder.

In case a dye such as phthalocyanine dyes other than the (composite) tungsten oxide is used singly, or combined with the (composite) tungsten oxide, the content of the dye is preferably in an amount of 0.1 to 20 parts by weight, further preferably 1 to 20 parts by weight, especially 1 to 10 parts by weight based on 100 parts by weight of the binder.

The preparation of the heat-ray shielding layer 25 is preferably carried out by applying a resin composition including (composite) tungsten oxide and a binder, etc., onto a surface of a transparent plastic film or a glass plate and drying the applied film, and, if necessary, then curing it by heating or light irradiation using ultraviolet rays, X-ray, γ-ray or electron beam. The drying is preferably carried out by heating the resin composition applied onto the transparent plastic film to 60 to 150°C, especially 70 to 110°C. The drying time generally is in the range of 1 to 10 minutes. The light irradiation can be carried out by using ultraviolet rays emitted from a lamp such as super high-pressure, high-pressure and low-pressure mercury lamps, carbon-arc, xenon-arc, or a metal halide lamp.

Fig. 3 is a schematic section view showing another example of preferred embodiments of a solar control glass of the invention. The solar control glass 30 shown in Fig. 3 has the structure that a glass plate 31, an adhesive layer 32 provided thereon, a transparent plastic film 33, a reflection layer 34 comprising an electrically-conductive polymer and a surface protection layer 36 consisting of an ultraviolet curable resin are superposed in this order to be united. The surface protection layer 36 has a thickness of not more than 2µm. Generally, the solar control glass 30 is prepared by forming the heat-ray reflection layer 34 consisting of an electrically conductive polymer on one side of the transparent plastic film 33, and forming the surface protection layer 36 consisting of an ultraviolet curable resin on the heat-ray reflection layer 34, and then bonding the transparent plastic film 33 to the glass plate 31 through the adhesive layer 32 such that the side opposite to the heat-ray reflection layer 34 of the transparent plastic film 33 faces the glass plate 31.

The solar control glass 30 shown in Fig. 3 has the same structure as in Fig. 1 except for forming the surface protection layer 36. In more detail, a surface emissivity of the heat-ray reflection layer 34 is not more than 0.7, and the electrically-conductive polymer in the heat-ray reflection layer 34 has an electrical conductivity of 0.005 to 200S/cm. Thereby, the solar control glass can provide sufficient thermal insulation property, and suppress the occurrence of the electromagnetic interference obstructing the use of a communication device such as a cell-phone. In case the layer consisting of the electrically conductive polymer further contains material having high physical properties and excellent water resistance for improving durability of the layer, the layer does not occasionally acquire sufficient thermal insulation property because of the reduction of density of the free electron. Further in case a surface protection layer having a considerable thickness is formed on the heat-ray reflection layer, sufficient thermal insulation property cannot be obtained because of absorption of infrared ray by the surface protection layer. By setting the thickness of the surface protection layer formed on the heat-ray reflection layer to the above-mentioned thickness, it is possible to protect the heat-ray reflection layer from physical damage such as abrasion or scratch and from water such as rain water, dew drop or moisture without impairing the excellent thermal insulation property of the heat-ray reflection layer comprising the electrically conductive polymer. Thereby, the solar control glass having improved durability can be obtained. The thickness of the surface protection layer is preferably in the range of 0.01 to 2µm, more preferably 0.1 to 1µm, especially preferably 0.4 to 0.8µm.

### [Surface protection layer]

Though the explanation in Fig. 3 describes that the surface protection layer 36 comprise an ultraviolet curable resin, the layer may comprise any materials as long as they make it possible to protect the heat-ray reflection layer from physical damage such as abrasion or scratch and water such as rain water, dew drop or moisture. The surface protection layer generally comprises a synthetic resin. The surface protection layer is preferably a hard coat layer having hardness of HB or higher that is determined by a pencil hardness test according to JIS K 5600 (1999). The hard coat layer is preferably formed from a resin composition consisting of ultraviolet curable resin composition or thermosetting resin composition. The ultraviolet curable resin composition or thermosetting resin composition is preferred because the composition can be cured in a short time to form the surface protection layer 36 as a hard coat layer having a predetermined hardness. The ultraviolet curable resin composition as explained in Fig. 3 is especially preferred because it can be cured in a shorter time and hence shows excellent productivity.

Examples of the ultraviolet curable resin or thermosetting resin include phenol resin, resorcinol resin, urea resin, melamine resin, epoxy resin, acrylic resin, urethane resin, furan resin and silicone resin. The ultraviolet curable resin composition contains further a photopolymerization initiator in addition to ultraviolet curable resin, while the thermosetting resin composition contains further a thermal polymerization initiator in addition to thermosetting resin.

Examples of the ultraviolet curable resins (monomers, oligomers) include (meth)acrylate monomers such as 2-hydroxyethyl (meth)acrylate, 2-hydroxyropyl (meth)acrylate, 4-hydroxybutyl (meth)acrylate, 2-ethylhexylpolyethoxy (meth)acrylate, benzyl (meth)acrylate, isobornyl (meth)acrylate, phenyloxyethyl (meth)acrylate, tricyclodecane mono(meth)acrylate, dicyclopentenyloxyethyl (meth)acrylate, tetrahydrofurfuryl (meth)acrylate, acryloylmorpholine, N-vinylcaprolactam, 2-hydroxy-3-phenyloxypropyl (meth)acrylate, o-phenylphenyloxyethyl (meth)acrylate, neopentylglycol di(meth)acrylate, neopentyl glycol dipropoxy di(meth)acrylate, neopentyl glycol hydroxypivalate di(meth)acrylate, tricyclodecanedimethylol di(meth)acrylate, 1,6-hexanediol di(meth)acrylate, nonanediol di(meth)acrylate, trimethylolpropane tri(meth)acrylate, pentaerythritol tri(meth)acrylate, pentaerythritol tetra(meth)acrylate, tris[(meth)acryloxyethyl]isocyanurate and ditrimethylolpropane tetra(meth)acrylate; and
the following (meth)acrylate oligomer such as:
polyurethane (meth)acrylate such as compounds obtained by reaction among the following polyol compound and the following organic polyisocyanate compound and the following hydroxyl-containing (meth)acrylate:
the polyol compound (e.g., polyol such as ethylene glycol, propylene glycol, neopentyl glycol, 1,6-hexanediol, 3-methyl-1,5-pentanediol, 1,9-nonanediol, 2-ethyl-2-butyl-1,3-propanediol, trimethylolpropane, diethylene glycol, dipropylene glycol, polypropylene glycol, 1,4-dimethylolcyclohexane, bisphenol-A polyethoxydiol and polytetramethylene glycol; polyesterpolyol obtained by reaction of the above-mentioned polyol with polybasic acid or anhydride thereof such as succinic acid, maleic acid, itaconic acid, adipic acid, hydrogenated dimer acid, phthalic acid, isophthalic acid and terephthalic acid; polycaprolactone polyol obtained by reaction of the above-mentioned polyol with ε-caprolactone; a compound obtained by reaction of the above-mentioned polyol and a reaction product of the above-mentioned polybasic acid or anhydride thereof and ε-caprolactone; polycarbonate polyol; or polymer polyol), and
the organic polyisocyanate compound (e.g., tolylene diisocyanate, isophorone diisocyanate, xylylene diisocyanate, diphenylmethane-4,4'-diisocyanate, dicyclopentanyl diisocyanate, hexamethylene diisocyanate, 2,4,4'-trimethylhexamethylene diisocyanate, 2,2',4-trimethylhexamethylene diisocyanate), and
the hydroxyl-containing (meth)acrylate (e.g., 2-hydroxyethyl (meth)acrylate, 2-hydroxyropyl (meth)acrylate, 4-hydroxybutyl (meth)acrylate, 2-hydroxy-3-phenyloxypropyl (meth)acrylate, cyclohexane-1,4-dimethylolmono(meth)acrylate, pentaerythritol tri(meth)acrylate, pentaerythritol tetra(meth)acrylate, dipentaerythritol hexa(meth)acrylate or glycerol di(meth)acrylate);
bisphenol-type epoxy(meth)acrylate obtained by reaction of bisphenol-A epoxy resin or bisphenol-F epoxy resin and (meth)acrylic acid.
These compounds can be employed singly or in combination of two or more kinds. The ultraviolet curable resin can be used together with thermo polymerization initiator, i.e., these can be employed as a thermosetting resin.

To obtain the surface protection layer as a hard coat layer, hard polyfunctional monomers such as pentaerythritol tri(meth)acrylate, pentaerythritol tetra(meth)acrylate, dipentaerythritol hexa(meth)acrylate and trimethylolpropane tri(meth)acrylate, are preferably used in a main component.

Photopolymerization initiators can be optionally selected depending upon the properties of the ultraviolet curable resin used. Examples of the photopolymerization initiators include acetophenone type initiators such as 2-hidroxy-2-methyl- 1-phenylpropane-1-on, 1-hydroxycyclohexylphenylketone and 2-methyl-1-[4-(methylthio)phenyl]-2-morphorino-propane-1-on; benzoin type initiators such as benzylmethylketal; benzophenone type initiators such as benzophenone, 4-phenylbenzophenone and hydroxybenzophenone; thioxanthone type initiators such as isopropylthioxanthone and 2,4-diethythioxanthone. Further, as special type, there can be mentioned methylphenylglyoxylate. Especially preferred are 2-hidroxy-2-methyl- 1-phenylpropane-1-on, 1-hydroxycyclohexylphenylketone, 2-methyl-1-[4-(methylthio)phenyl]-2-morphorinopropane-1-on and benzophenone. These photopolymerization initiators can be employed together with one or more kinds of a conventional photopolymerization promoter such as a benzoic acid type compound (e.g., 4-dimethylaminobenzoic acid) or a tertiary amine compound by mixing with the promoter in optional ratio. Only the initiator can be employed singly or in combination of two or more kinds. Especially, 1-hydroxycyclohexylphenylketone (Irgercure 184, available from BASF Japan Ltd.) is preferred. The initiator is preferably contained in the resin composition in the range of 0.1 to 10% by weight, particularly 0.1 to 5% by weight based on the resin composition.

The thermal polymerization initiator of the thermosetting resin is generally a compound containing a functional group initiating polymerization by heating such as an organic peroxide or cationic polymerization initiator. Especially, an organic peroxide is preferred. Examples of the initiator include 1,1-bis(t-butylperoxy)-3,3,5-trimethylcyclohexane, 1,1-bis(t-hexylperoxy)-3,3,5-trimethylcyclohexane, 2,5-dimethyl-2,5-(t-butylperoxy)hexane, t-butylperoxy-2-ethylhexanate, t-butylperoxybenzoate, and t-butylperoxyisopropylmonocarbonate. Particularly 1,1-bis(t-butylperoxy)-3,3,5-trimethylcyclohexane, and 2,5-dimethyl-2,5-(t-butylperoxy)hexane are preferred. The thermal polymerization initiator can be employed singly or in combination of two or more kinds. The content of the initiator in the resin composition is generally in the range of 0.01 to 10% by weight, preferably 0.1 to 5% by weight based on the resin composition.

The surface protection layer further may contain an ultraviolet absorber, an infrared absorbing agent, an aging resistant agent, a processing auxiliary agent for paint and a coloring agent in a small amount. The content is generally used in an amount of 0.1 to 10% by weight, preferably 0.1 to 5% by weight based on the resin composition.

The surface protection layer can be formed by mixing a resin composition (preferably including ultraviolet curable resin and photopolymerization initiator, or including thermosetting resin and thermal polymerization initiator) and if necessary, other additives to give a coating liquid, applying the coating liquid onto a surface of a heat-ray reflection layer, and drying the applied layer, and then curing the dried layer by ultraviolet irradiation or heat treatment.

The application in the use of the ultraviolet curable resin can be carried out, for example, by applying a coating liquid (solution) of ultraviolet curable resin including acrylic monomers in a solvent such as toluene by means of gravure coater, and drying, and then exposing to UV rays and curing. This wet-coating method enables high-speed and uniform film formation at low cost. After the coating, for example, the coated layer is exposed to UV rays to be cured whereby the effects of improved adhesion and enhanced hardness of the layer can be obtained.

In the use of the ultraviolet curable resin, when the ultraviolet curable resin is cured in the presence of nitrogen, the resultant surface protection layer has higher hardness because inhibition of polymerization by oxygen in air can be eliminated. Since the surface protection layer of the invention has a thin film of not more than 2µm, the curing in the presence of nitrogen advantageously enables the formation of the surface protection layer having high hardness.

In the UV- rays curing, it is possible to adopt, as light source used, various sources generating light in the wavelength range of from ultraviolet to visible rays. Examples of the sources include super-high-pressure, high-pressure and low-pressure mercury lamps, a chemical lamp, a xenon lamp, a halogen lamp, a mercury halogen lamp, a carbon arc lamp, and an incandescent electric lamp, and laser beam. The exposing time is generally in the range of a few seconds to a few minutes, depending upon kinds of the lamp and strength of light. To promote the curing, the laminate may be heated beforehand for 40 to 120°C, and then the heated laminate may be exposed to ultraviolet rays.

The solar control glass of the invention is prepared, for example, by providing the transparent plastic film having the heat-ray reflection layer, etc. and the glass plate, superposing the transparent plastic film having the heat-ray reflection layer, etc. on the glass plate through the adhesive layer to form a laminate, which is degassed, the adhesive layer being formed on the side opposite to the heat-ray reflection layer of the transparent plastic film or provided on the glass plate, and pressing the laminate under heating (preferably 40 to 200°C for 1 to 120 minutes, especially 60 to 150°C for 1 to 20 minutes), the pressure being preferably 1.0×10³ to 5.0×10⁷Pa. These steps can be carried out, for example, by using vacuum package system or nip rollers system.

For example, in case EVA is used as the adhesive layer, EVA is generally crosslinked at 100 to 150°C (especially approx. 130°C) for10 minutes to 1 hour. This crosslinking is carried out by degassing the laminate, preliminarily bonding it under pressure, for example, at a temperature of 80 to 120°C and heating it at 100 to 150°C (especially approx. 130°C) for 10 minutes to 1 hour. Cooling after the crosslinking is generally carried out at room temperature. The cooling is preferably fast.

Even if the transparent plastic film is not used, the adhesive layer can be provided on the glass plate in order to improve the adhesion of the heat-ray shielding layer or the heat-ray reflection layer to the glass plate.

### [Solar control double glass]

The solar control glass of the invention is preferably used for a solar control double glass.

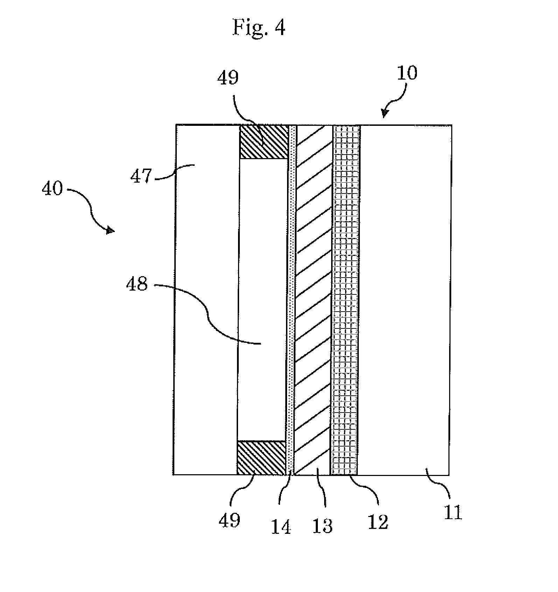

Fig. 4 is a schematic section view showing a typical example of embodiments of a solar control double glass according to the invention. As shown in the figure, the solar control double glass 40 of the invention is composed of the solar control glass 10 of the invention, which has the structure that the glass plate 11, the adhesive layer 12 provided thereon, the transparent plastic film 13 and the heat-ray reflection layer 14 comprising an electrically-conductive polymer are superposed in this order to be united, a glass plate 47 arranged with facing the solar control glass 10 at an interval, a spacer 49 combining them by means of adhesive (not shown in Figure 4) provided on their outer peripheries, and a hollow layer 48 formed between the solar control glass 10 and the glass plate 47 by the spacer 49. As mentioned above, a surface emissivity of the heat-ray reflection layer 14 is not more than 0.7, and the electrically-conductive polymer in the heat-ray reflection layer 14 has an electrical conductivity of 0.005 to 200S/cm. Thereby, the solar control glass can provide sufficient thermal insulation property, and suppress the occurrence of the electromagnetic interference obstructing the use of a communication device such as a cell-phone. Further, the hollow layer 48 makes it possible to add further thermal insulation property. Furthermore, in the solar control double glass 40, the solar control glass 10 and glass plate 47 are arranged such that the heat-ray reflection layer 14 faces the glass plate 47. Thereby, it is possible to protect the heat-ray reflection layer 14 from water such as rain water, dew drop or moisture and physical damage such as abrasion or scratch, and to maintain the thermal insulation property for a prolonged period.

Though the solar control double glass of Fig. 4 employs the solar control glass 10 shown in Fig. 1, the solar control double glass of the invention can employ in the solar control glass 20 or 30 shown in Fig. 2 or 3. Examples of the hollow layer of the solar control double glass include a dry air layer and an inert gas layer. The use of the hollow layer enhances thermal insulation property and simultaneously suppresses deterioration of the heat-ray reflection layer 14 over time. The dry air layer may use dried air obtained by using a spacer containing a desiccant agent. The inert gas layer generally contains inert gas such as krypton gas, argon gas or xenon gas. The thickness of the hollow layer is preferably in the range of 6 to 12mm.

The glass plate of the solar control double glass includes various glasses such as a float glass, a figured glass, a glass having light diffusion function by surface treatment, a wired glass, a lined sheet glass, a reinforced glass, a double reinforced glass, a low reflectance glass, a high transparent sheet glass, a ceramic printed glass, and a special glass having heat ray or ultraviolet ray absorbing function. The various glasses can be appropriately selected for use as the glass plate. Further, a soda silicate glass, a soda lime glass, a borosilicate glass, an aluminosilicate glass and various crystallized glasses can be used in view of the composition of the glass plate.

The shape of the solar control double glass of the invention includes various shapes such as rectangle, circle and rhombus, and the shape is selected depending upon use applications. The solar control double glass can be used in wide applications such as a widow glass for building and vehicle (automobile, rail car, marine vessel), an electronic device such as a plasma display, and a door or wall portion of various devices such as refrigerator and thermal insulation system.

In case the solar control double glass of the invention is used for a widow glass for building and vehicle in temperate regions such as relatively low-latitude region, the solar control double glass is preferably arranged such that the glass plate is placed on the indoor side while the solar control glass placed on the outdoor side. In contrast, in case the solar control double glass of the invention is used in cold regions such as relatively high-latitude region, the solar control double glass is preferably arranged such that the glass plate is placed on the outdoor side while the solar control glass placed on the indoor side.

### Example

Examples are set forth below to explain the present invention in detail.

### 1. Preparation of solar control double glass

### [Example 1]

### (1) Preparation of heat-ray reflection layer

A composition having the following formulation was applied onto PET film (thickness: 100µm) with a roll coater, dried in an oven at 80°C for 1 minutes, and subsequently exposed to ultraviolet rays (high-pressure mercury lamps, irradiation distance of 20cm, irradiation time of 5sec.). Thereby a hard coat layer comprising acrylate resin (thickness: 500nm) was formed on the PET film.

(Formulation of hard coat layer (parts: parts by weight))
Dipentaerythritol hexaacrylate (DPHA); 40 parts
Photopolymerization initiator (Irgacure® 184); 2 parts
Methyl isobutyl ketone; 180 parts

Subsequently, an aqueous dispersion (solid content: 1.3 % by weight) was applied onto the surface of the hard coat layer with a bar coater, dried at 135°C for 1minute to form a heat-ray reflection layer (thickness: 500nm). The aqueous dispersion is a mixture consisting of poly(3,4-ethylenedioxythiophene) and poly(styrene sulfonic acid) as an electrically-conductive polymer, and has trade name of CLEVIOS P HC V4 which is available from H. C. Starck GmbH. The electrical conductivity of the electrically-conductive polymer is 10S/cm.

### (2) Preparation of adhesive layer

A composition having the following formulation was rolled by calendaring to prepare an adhesive layer (thickness: 0.4mm) in the form of sheet. The kneading of the composition was carried out at 80°C for 15 minutes, and the temperature of the calendar roll was 80°C and its processing rate was 5m/min.

### (Formulation of adhesive layer (parts: parts by weight))

EVA (content of vinyl acetate based on EVA is 25wt. %, Ultracene 635 available from Tosoh Corporation); 100 parts
Organic peroxide (t-butylperoxy-2-ethylhexyl monocarbonate, Trigonox 117 available from Kayaku Akzo Corporation); 2.5 parts
Crosslinking auxiliary (triallyl isocyanurate, TAIC® available from Nippon Kasei Chemical Co., Ltd.); 2 parts
Silane coupling agent (γ-methacryloxypropyltrimethoxysilane, KBM503 available from Shin-Etsu Chemical Co., Ltd.); 0.5 parts
Ultraviolet absorber (Uvinul 3049 available from BASF); 0.5 parts

### (3) Preparation of solar control glass

The adhesive layer, and the PET film having the hard coat layer and the heat-ray reflection layer on the surface in this order were laminated on a glass plate (thickness: 3mm) in this order. The resultant laminate was temporarily bonded under pressure by heating at 100°C for 30 minutes, and then heated in an autoclave under pressure of 13×10⁵Pa at 140°C for 30 minutes. Thereby, the glass plate and the PET film were combined to be united to prepare a solar control glass.

### (4) Preparation of solar control double glass

A glass plate (thickness: 3mm) and the solar control glass as prepared above were superposed with each other through a spacer made of aluminum in the form of frame which was placed on their peripheral area such that the heat-ray reflection layer of the solar control glass is present on the side of an air layer formed by the spacer, and they were bonded with butyl rubber. The air layer had a thickness of 12mm.

### [Example 2]

The procedures of Example 1 were repeated except for changing the thickness of the heat-ray reflection layer to 100nm to prepare a solar control double glass.

### [Example 3]

The procedures of Example 1 were repeated except for changing the thickness of the heat-ray reflection layer to 1000nm to prepare a solar control double glass.

### [Example 4]

The procedures of Example 1 were repeated except for changing the aqueous dispersion of the electrically-conductive polymer to an aqueous dispersion (solid content: 1.3 % by weight), which is a mixture consisting of poly(3,4-ethylenedioxythiophene) and poly(styrene sulfonic acid) and has trade name of CLEVIOS P which is available from H. C. Starck GmbH, to prepare a solar control double glass. The electrical conductivity of the electrically-conductive polymer is 1S/cm.

### [Example 5]

The procedures of Example 4 were repeated except for changing the thickness of the heat-ray reflection layer to 100nm to prepare a solar control double glass.

### [Example 6]

The procedures of Example 4 were repeated except for changing the thickness of the heat-ray reflection layer to 1000nm to prepare a solar control double glass.

### [Example 7]

The procedures of Example 1 were repeated except for changing the aqueous dispersion of the electrically-conductive polymer to a mixture of an aqueous dispersion (solid content: 1.3 % by weight), which is a mixture consisting of poly(3,4-ethylenedioxythiophene) and poly(styrene sulfonic acid) and has trade name of CLEVIOS PHC V4 which is available from H. C. Starck GmbH, and a silicon alkoxide hydrolysate to prepare a solar control double glass. The electrical conductivity of the electrically-conductive polymer is 0.005S/cm.

### [Example 8]

The procedures of Example 7 were repeated except for changing the thickness of the heat-ray reflection layer to 100nm to prepare a solar control double glass.

### [Example 9]

The procedures of Example 7 were repeated except for changing the thickness of the heat-ray reflection layer to 1000nm to prepare a solar control double glass.

### [Example 10]

The procedures of Example 1 were repeated except for changing the aqueous dispersion of the electrically-conductive polymer to a mixture of an aqueous dispersion (solid content: 1.3 % by weight), which is a mixture consisting of poly(3,4-ethylenedioxythiophene) and poly(styrene sulfonic acid) and has trade name of CLEVIOS FE which is available from H. C. Starck GmbH, and a silicon alkoxide hydrolysate to prepare a solar control double glass. The electrical conductivity of the electrically-conductive polymer is 20S/cm.

### [Example 11]

The procedures of Example 10 were repeated except for changing the thickness of the heat-ray reflection layer to 100nm to prepare a solar control double glass.

### [Example 12]

The procedures of Example 10 were repeated except for changing the thickness of the heat-ray reflection layer to 1000nm to prepare a solar control double glass.

### [Example 13]

The procedures of Example 1 were repeated except for changing the aqueous dispersion of the electrically-conductive polymer to a mixture of an aqueous dispersion (solid content: 1.3 % by weight), which is a mixture consisting of poly(3,4-ethylenedioxythiophene) and poly(styrene sulfonic acid) and has trade name of CLEVIOS FE which is available from H. C. Starck GmbH, and a silicon alkoxide hydrolysate, further changing the thickness of the heat-ray reflection layer to 100nm to prepare a solar control double glass. The electrical conductivity of the electrically-conductive polymer is 200S/cm.

### [Comparison Example 1]

The procedures of Example 1 were repeated except for changing the aqueous dispersion of the electrically-conductive polymer to a mixture of an aqueous dispersion (solid content: 1.3 % by weight), which is a mixture consisting of poly(3,4-ethylenedioxythiophene) and poly(styrene sulfonic acid) and has trade name of CLEVIOS PHC V4 which is available from H. C. Starck GmbH, and dimethylsulfoxide to prepare a solar control double glass. The electrical conductivity of the electrically-conductive polymer is 500S/cm.

### [Comparison Example 2]

The procedures of Comparison Example 1 were repeated except for changing the thickness of the heat-ray reflection layer to 100nm to prepare a solar control double glass.

### [Comparison Example 3]

The procedures of Comparison Example 1 were repeated except for changing the thickness of the heat-ray reflection layer to 1000mn to prepare a solar control double glass.

### [Comparison Example 4]

The procedures of Example 1 were repeated except for changing the aqueous dispersion of the electrically-conductive polymer to a mixture of an aqueous dispersion (solid content: 1.3 % by weight), which is a mixture consisting of poly(3,4-ethylenedioxythiophene) and poly(styrene sulfonic acid) and has trade name of CLEVIOS P which is available from H. C. Starck GmbH, and a silicon alkoxide hydrolysate to prepare a solar control double glass. The electrical conductivity of the electrically-conductive polymer is 0.001S/cm.

### [Comparison Example 5]

The procedures of Comparison Example 4 were repeated except for changing the thickness of the heat-ray reflection layer to 100mn to prepare a solar control double glass.

### [Comparison Example 6]

The procedures of Comparison Example 4 were repeated except for changing the thickness of the heat-ray reflection layer to 1000nm to prepare a solar control double glass.

### 2. Evaluation method

### (1) Emissivity

The emissivity is determined according to JIS R 3106.

### (2) Heat transmission coefficient (U-value)

The coefficient is determined according to JIS R 3107.

### (3) Electromagnetic interference

Electrical field shielding property at the frequency of 700MHz is evaluated according to KEC-method, which is a method defined by Kansai Electronic Industry Development Center. The electromagnetic interference is evaluated as follows.

"○": an attenuation of the signal according to KFC-method is 1db or less, which is regarded as no electromagnetic interference.

"×": an attenuation of the signal according to KFC-method is more than 1db.

### [Evaluation result]

Evaluation result of the double glass samples is shown in Table 1 and Table 2.

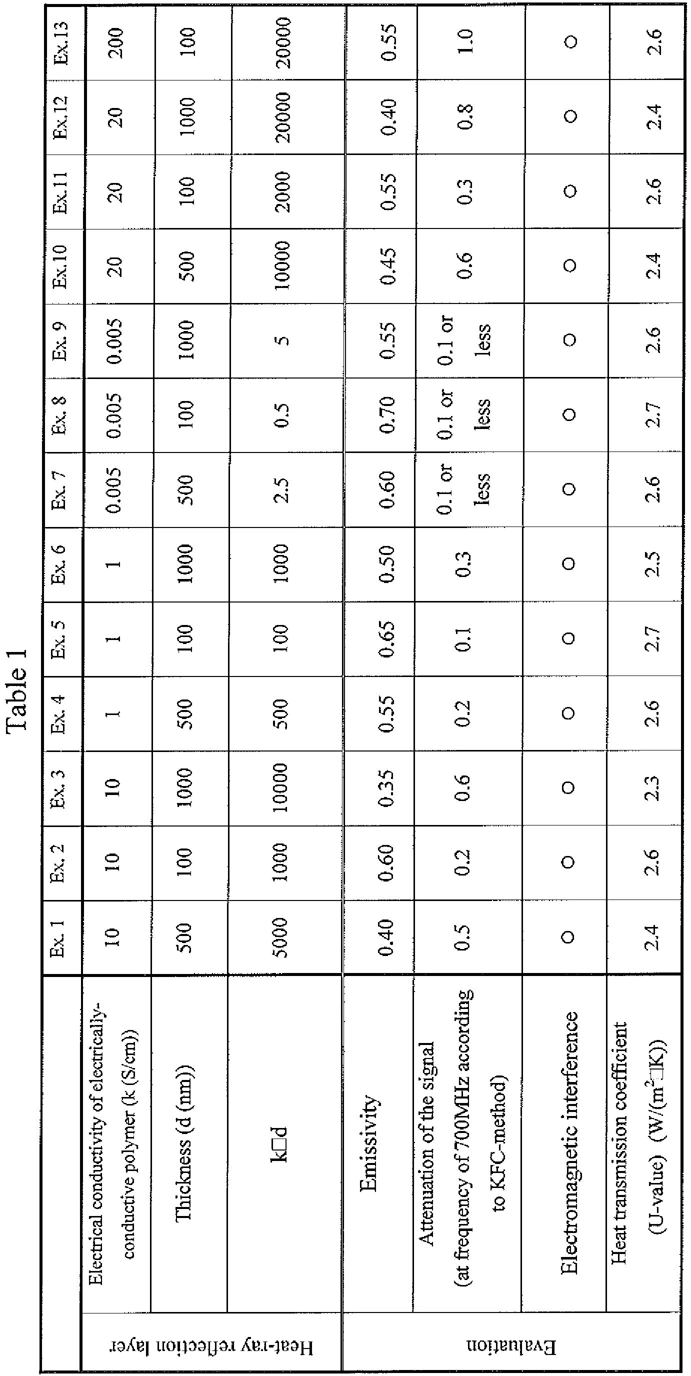

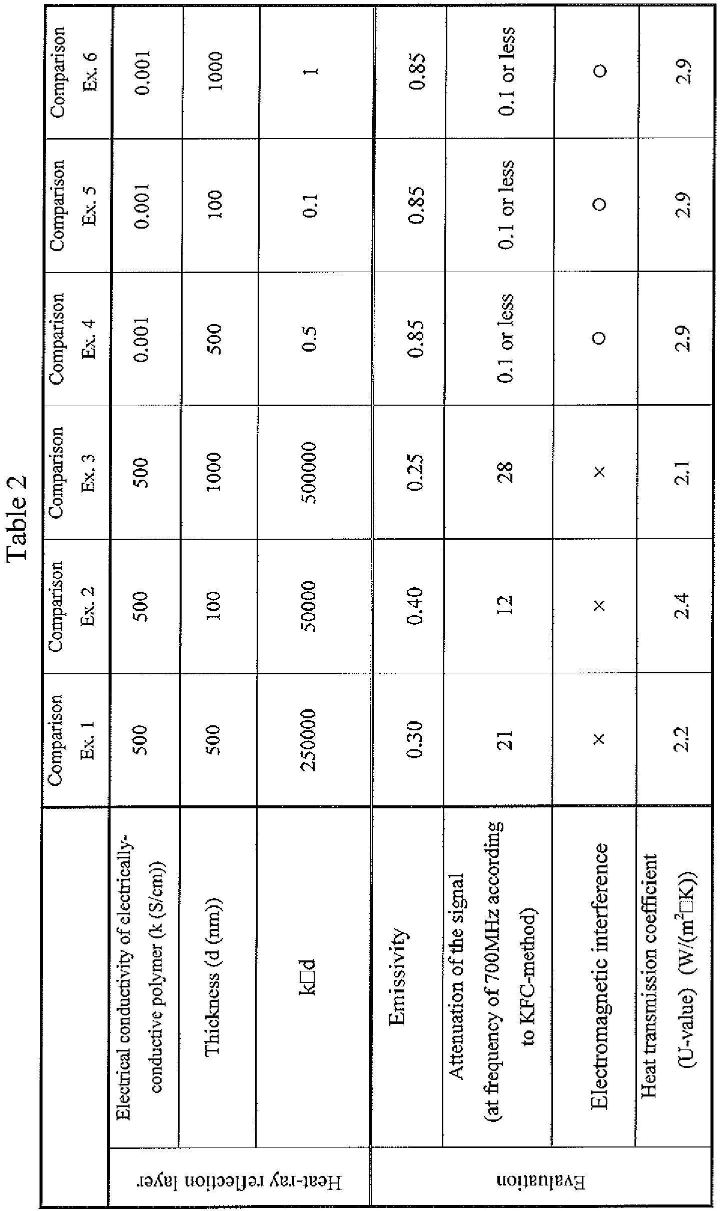

As apparent from Table 1 and Table 2, the double glasses, wherein the heat-ray reflection layer has a surface emissivity of not more than 0.7, and the electrically-conductive polymer in the heat-ray reflection layer has an electrical conductivity of 0.005 to 200S/cm, according to Examples 1 to 13 show sufficient thermal insulation property, without suffering electromagnetic interference. On the other hand, the double glasses of Comparison Examples 1 to 3, wherein the electrically-conductive polymer has an electrical conductivity of 500S/cm, suffer the electromagnetic interferences. Furthermore, the double glasses of Comparison Examples 4 to 6, wherein the electrically-conductive polymer has an electrical conductivity of 0.001S/cm, show high emissivity which means reduction of the thermal insulation property.

Meanwhile, the present invention is not restricted to the embodiments and Examples described previously, and therefore can be varied in wide range as long as satisfies the scope of the gist of the invention.

### Industrial Applicability

It is possible to provide a solar control glass or a solar control double glass that can retain a reduced air-conditioning loads of buildings, vehicles such as bus and automobile, and rail cars such as electric car without obstructing a use of a communication device such as a cell-phone.

### Description of the reference numbers

10, 20, 30: Solar control glass
11, 21, 31, 47: Glass plate
12, 22, 32: Adhesive layer
13, 23, 33: Transparent plastic film
14, 24, 34: Heat-ray reflection layer
25: Heat-ray shielding layer
36: Surface protection layer
48: Hollow layer
49: Spacer
40: Solar control double glass

## Claims

1. A solar control glass which comprises a glass plate and a heat-ray reflection layer comprising an electrically-conductive polymer provided thereon,
wherein the heat-ray reflection layer has a surface emissivity of not more than 0.7, and the electrically-conductive polymer in the heat-ray reflection layer has an electrical conductivity of 0.005 to 200S/cm.

2. A solar control glass as defined in claim 1, wherein the electrically-conductive polymer in the heat-ray reflection layer has an electrical conductivity of 0.01 to 100S/cm.

3. A solar control glass as defined in claim 1, wherein the electrically-conductive polymer in the heat-ray reflection layer has an electrical conductivity of 0. 1 to 20S/cm.

4. A solar control glass as defined in any of claims 1 to 3, wherein the heat-ray reflection layer has a thickness of 10 to 3,000nm.

5. A solar control glass as defined in any of claims 1 to 4, wherein a product (k, d) of the electrical conductivity (k (S/cm)) of the electrically-conductive polymer in the heat-ray reflection layer and the thickness (d (nm)) of the heat-ray reflection layer is 0.5 to 20000.

6. A solar control glass as defined in any of claims 1 to 5, wherein the electrically-conductive polymer is a polythiophene derivative comprising a recurring unit represented by the following formula (I): 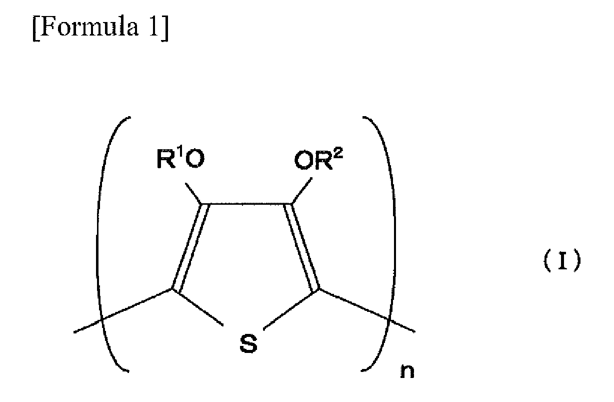 in which R¹ and R² independently represent a hydrogen atom or an alkyl group of 1 to 4 carbon atoms, or R¹ and R² combine with each other to form an alkylene group of 1 to 4 carbon atoms which may be arbitrarily substituted, and n is an integer of 50 to 1,000.

7. A solar control glass as defined in any of claims 1 to 6, wherein the solar control glass comprises further a heat-ray shielding layer which consist of a resin composition comprising a near-infrared absorbing agent and a binder.

8. A solar control glass as defined in claim 7, wherein the near-infrared absorbing agent is tungsten oxide and/or composite tungsten oxide.

9. A solar control glass as defined in claim 8, wherein the tungsten oxide is represented by a general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.

10. A solar control glass as defined in any of claims 7 to 9, wherein the heat-ray shielding layer has a thickness of 0.5 to 50µm.

11. A solar control glass as defined in any of claims 1 to 10, wherein the solar control glass has further a surface protection layer formed on the heat-ray reflection layer, the surface protection layer having a thickness of not more than 2µm.

12. A solar control glass as defined in claim 11, wherein the surface protection layer is a hard coat layer formed from an ultraviolet-curable resin composition or a thermosetting resin composition.

13. A solar control double glass which comprises a solar control glass as defined in any of claims 1 to 12, and another glass plate, the solar control glass and the another glass being arranged at an interval such that the heat-ray reflection layer or the surface protection layer faces the another glass and the interval forming a hollow layer.
